(19) Europäisches Patentamt
European Patent Office
Office européen des brevets

(11) **EP 2 705 221 B1**

(12) **EUROPEAN PATENT SPECIFICATION**

(45) Date of publication and mention
of the grant of the patent:
**22.08.2018 Bulletin 2018/34**

(51) Int Cl.:
*F01D 17/02* (2006.01)     *G05B 15/02* (2006.01)
*G05B 23/02* (2006.01)     *F01D 21/00* (2006.01)

(21) Application number: **12726922.3**

(22) Date of filing: **30.04.2012**

(86) International application number:
**PCT/US2012/035768**

(87) International publication number:
**WO 2012/151150 (08.11.2012 Gazette 2012/45)**

(54) **METHOD FOR PREDICTING A REMAINING USEFUL LIFE OF AN ENGINE AND COMPONENTS THEREOF**

VERFAHREN ZUR VORHERSAGE DER VERBLEIBENDEN LEBENSDAUER EINES MOTORS UND SEINER KOMPONENTEN

PROCÉDÉ POUR PRÉDIRE LA DURÉE DE VIE UTILE RESTANTE D'UN MOTEUR ET DE SES COMPOSANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.05.2011 US 201113101360**

(43) Date of publication of application:
**12.03.2014 Bulletin 2014/11**

(73) Proprietor: **Siemens Energy, Inc.**
**Orlando, FL 32826-2399 (US)**

(72) Inventors:
• **MITCHELL, David J.**
**Oviedo, FL 32765 (US)**
• **KULKARNI, Anand A.**
**Charlotte, NC 28277 (US)**

(74) Representative: **Maier, Daniel Oliver et al**
**Siemens AG**
**Postfach 22 16 34**
**80506 München (DE)**

(56) References cited:
**WO-A2-2008/091289**     **US-A1- 2003 120 402**
**US-A1- 2006 056 959**

## Description

### FIELD OF THE INVENTION

The present invention relates generally to monitoring operating environments and in particular to components enabled for transmitting data with respect to the condition of individual components within an operating environment such as a gas turbine engine. More specifically, the invention relates to conditioned based maintenance methods used for predicting the remaining useful life of complex engine systems such as turbine engines and components thereof.

### BACKGROUND OF THE INVENTION

Gas combustion turbines are used for a variety of applications such as driving an electric generator in a power generating plant or propelling a ship or an aircraft. Firing temperatures in modern gas turbine engines continue to increase in response to the demand for higher efficiency engines. Superalloy materials have been developed to withstand the corrosive high temperature environment that exists within a gas turbine engine. However, even superalloy materials are not able to withstand extended exposure to the hot combustion gas of a current generation gas turbine engine without some form of cooling and/or thermal insulation.

Thermal barrier coatings are widely used for protecting various hot gas path components of a gas turbine engine. The reliability of such coatings is critical to the overall reliability of the machine. The design limits of such coatings are primarily determined by laboratory data. However, validation of thermal barrier coating behavior when subjected to the stresses and temperatures of the actual gas turbine environment is essential for a better understanding of the coating limitations. Such real world operating environment data is very difficult to obtain, particularly for components that move during the operation of the engine, such as the rotating blades of the turbine.

Despite the extreme sophistication of modern turbine engines, such as gas turbines for generating electrical power or aircraft engines for commercial and military use, designers and operators have very little information regarding the internal status of the turbine engine components during operation. This is due to the harsh operating conditions, which have prevented the use of traditional sensors for collecting reliable information of critical engine components.

Many current turbines are equipped with sensors capable of limited functions such as exhaust gas-path temperature measurements, flame detection and basic turbine operating conditions. Based on this information, turbine operators such as utility companies operate engines in a passive mode, in which maintenance is scheduled based on prior histories of similar engines. Engine rebuilds and routine maintenance are performed in the absence of a prior knowledge of the remaining or already utilized life of individual components. The lack of specific component information makes early failure detection very difficult, often with the consequence of catastrophic engine failure due to abrupt part failure. This results in inefficient utilization, unnecessary downtime and an enormous increase in operating cost.

Currently, the gas turbine industry approach is to depend on the measurement of gas path temperature, which is related back to specific component problems based on experience and history regarding a class of engines. This approach is highly subjective and only allows for determining already severe situations with an engine. It does not provide indications of impending damage or insight into the progression of events leading up to and causing engine damage due to component degradation or failure.

The instrumentation of a component such as a blade or vane within a steam turbine typically includes placing wire leads on the balance wheel, which continue on to the blade airfoil. The wire leads are typically held together by an epoxy. These wires are routed from within the component to the turbine casing. The pressure boundary of a component may be breached to introduce a sensor such as a thermocouple and a braze is back filled to hold the thermocouple in place. Each thermocouple sensor has wire leads coming out of the component that are connected back to a diagnostic unit. Instrumenting a plurality of components of a turbine in this manner results in an extensive network of wires just for monitoring the single operating condition of temperature. Instrumenting components using this technique is expensive, which is a barrier to instrumenting a large number of components within a single turbine. Further, the wire leads and data transfer is frequently poor, which can result in costly repairs and flawed data analysis.

Using thermocouples for temperature measurements in the gas path of a turbine may be disadvantageous because it only provides feedback to an operator that a temperature change has occurred in the gas path. It does not provide any indication as to why the temperature change has occurred. For diagnosing problems with blades or vanes based on a measured temperature change, there has to be a historical correlation between the measured temperature differential and the specific problem, such as a hole in a vane. This correlation is difficult and time consuming to derive to within a reasonable degree of certainty and needs to be done on an engine-by-engine basis taking into account turbine operation conditions. When a temperature differential is measured, it is difficult, if not impossible, to predict what the problem is or where it is located. Consequently, the turbine must typically be shut down and inspected to determine the scope of repair, replacement or other maintenance to be performed.

In any application, combustion turbines are routinely subject to various maintenance procedures as part of their normal operation. Diagnostic monitoring systems for gas turbines commonly include performance monitoring equipment that collects relevant trend and fault data used for diagnostic trending. In diagnostic trend analysis, certain process data (such as exhaust gas temperature, fuel flow, rotor speed and the like) that are indicative of overall gas turbine performance and/or condition are compared to a parametric baseline for the gas turbine. Any divergence of the raw trend data from the parametric baseline may be indicative of a present or future condition that requires maintenance. Such diagnostic monitoring systems can only predict or estimate specific component conditions and do not collect data from or provide any analysis with respect to the actual condition of a specific component itself.

In this respect, conventional methods of predicting component failure for gas turbines and of scheduling maintenance have not been entirely accurate or optimized. The traditional "duty cycle" used for predictive maintenance does not reflect real operational conditions, especially off-design operations. The actual life of specific components of a gas turbine depends strongly on the actual usage of that gas turbine and the specific components within the turbine. US 2003/0120402 A1 discloses an example prior art method for predicting the remaining useful life of a gas turbine engine. For example, elevated temperatures and stresses within the turbine, and aggressive environmental conditions may cause excessive wear on components in the turbine beyond that predicted with the standard design duty cycle. Off-design operating conditions, which are often experienced by industrial gas turbines, are not reflected by the standard duty cycles. The actual life of components in the gas turbine may be substantially less than that predicted by the design duty cycle. Alternatively, if more favorable conditions are experienced by an actual gas turbine than are reflected in the design duty cycle, the actual component life may last substantially longer than that predicted by maintenance schedules based on the design duty cycle. In either event, the standard design duty cycle model for predicting preventive maintenance does not reliably indicate the actual wear and tear experienced by gas turbine components.

Known techniques for predicting maintenance and component replacement rely on skilled technicians to acquire or interpret data regarding the operation of a combustion turbine. Such techniques are subject to varying interpretations of that data by technicians. Technicians may manually evaluate the operational logs and/or data collected from gas turbines. Technicians, for example, may evaluate start and stop times and power settings to determine how many duty cycles had been experienced by the gas turbine, their frequency, period and other factors. In addition, if the data log of a gas turbine indicated that extraordinary conditions existed, such as excessive temperatures or stresses, the technicians may apply "maintenance factors" to quantify the severity of these off-design operational conditions.

None of these techniques provides accurate information with respect to the actual condition of a specific component or component coating, which may lead to unnecessary repair, replacement or maintenance being performed causing a significant increase in operating costs. Monitoring systems and methods now exist that incorporate sensors mounted directly on components by embedding the sensors within component coatings, such as thermal barrier coatings, for detecting component operating conditions such as wear of a component, heat flux across a component coating, spallation of a coating, strain across an area of a component or crack formation within a component substrate or coating. Such systems may have capabilities for the wireless transmission of data relative to component operating conditions, and provide more accurate real-time data relative to such operating conditions. However, such conditioned based monitoring/maintenance systems have not been incorporated into component or engine life prediction systems or methods.

BRIEF DESCRIPTION OF THE DRAWINGS

The invention is explained in the following description in view of the drawings that show:

FIG. 1 is a cross-sectional view of an exemplary combustion turbine with which embodiments of the invention may be used and an exemplary monitoring and control system for collecting and analyzing component data from the combustion.

FIG. 2 is a flow chart illustrating steps involved in the method of life prediction of a remaining useful life of a complex engine system and components thereof.

FIG. 3A is a histogram identifying components of a turbine engine that are most subject to failures.

FIG. 3B is a histogram identifying the failure modes of the components identified in FIG. 3A.

FIG. 4 is a predictive curve illustrating a predicted trend in coating spallation life as a function of time, temperature, the number of engine operating cycles and the rate of the cycles.

FIG. 5A is a predictive curve illustrating the trend in oxide growth thickness as a function of time and temperature.

FIG. 5B is a predictive curve illustrating the trend in the coating depletion life as a function of the oxide thickness or oxide growth rate.

FIG. 6 is a sensor calibration curve plotting a sensor output as a function of engine temperature.

FIG. 7A is a component life curve providing an estimated remaining life for a component due to the spallation failure mode for that component.

FIG. 7B is a component life curve providing an estimated remaining life for a component due to the coating depletion (oxide growth) failure mode for that component.

FIG. 8 is an engine component life chart showing different estimated failure modes of a component relative to one another.

FIG. 9 is a display showing the determined remaining useful life for the listed components.

DETAILED DESCRIPTION OF THE INVENTION

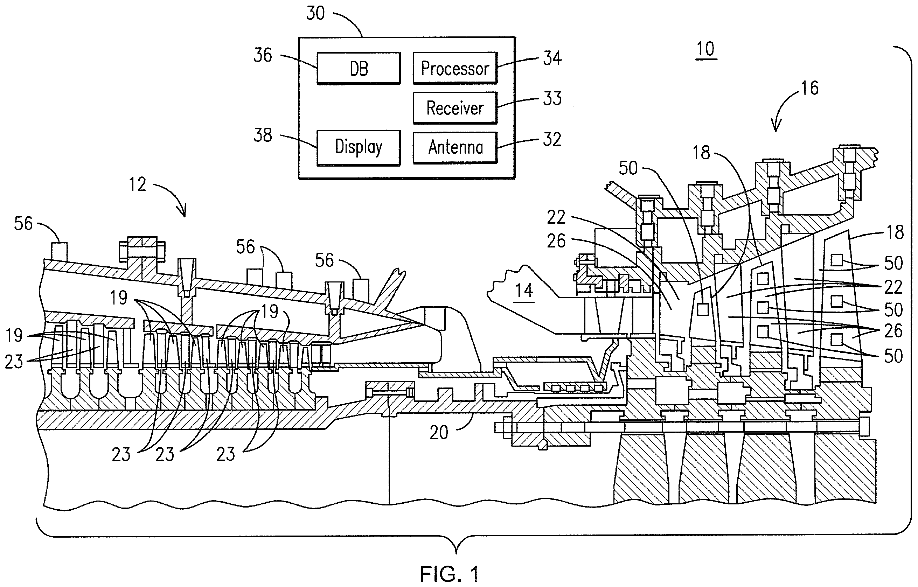

FIG. 1 illustrates an exemplary combustion turbine 10 such as a gas turbine used for generating electricity as will be recognized by those skilled in the art. Embodiments of the invention may be used with combustion turbine 10 or in numerous other operating environments and for various purposes as will be recognized by those skilled in the art. For example, embodiments of the below described sensors and telemetry devices may be used in aircraft engines for monitoring temperature and heat flux in boilers, heat exchangers and exhaust stacks; determining insulation performance and degradation; determining pipe fouling; and evaluating vibrating component health. Embodiments may be used in the automotive industry for monitoring combustion chamber conditions, rotating components such as crankshaft, cams, transmissions and differentials, and determining suspension and frame integrity for heavy-duty vehicles. Embodiments may also be used in measuring strain and heat flux in tanks, portable and other equipment operating in desert, wet, and/or high temperature configurations.

Returning to FIG. 1, combustion turbine 10 includes a compressor 12, at least one combustor 14 (broken away) and a turbine 16. Compressor 12, combustor 14 and turbine 16 are sometimes referred to collectively as a gas turbine engine. Turbine 16 includes a plurality of rotating blades 18, secured to a rotatable central shaft 20. A plurality of stationary vanes 22 are positioned between blades 18, with vanes 22 being dimensioned and configured to guide air over blades 18. Blades 18 and vanes 22 will typically be made from nickel-cobalt, and may be coated with a thermal barrier coating 26, such as yttria-stabilized zirconia. Similarly, compressor 12 includes a plurality of rotating blades 19 positioned between respective vanes 23.

In use, air is drawn in through compressor 12, where it is compressed and driven towards combustor 14. Combustor 14 mixes the air with fuel and ignites it thereby forming a working gas. This working gas will typically be above 1300°C. This gas expands through turbine 16, being guided across blades 18 by vanes 22. As the gas passes through turbine 16, it rotates blades 18 and shaft 20, thereby transmitting usable mechanical work through shaft 20. Combustion turbine 10 may also include a cooling system (not shown), dimensioned and configured to supply a coolant, for example, steam or compressed air, to blades 18 and vanes 22.

The environment wherein blades 18 and vanes 22 operate is subject to high operating temperatures and is particularly harsh, which may result in serious deterioration of blades 18 and vanes 22. This is especially likely if the thermal barrier coating 26 should spall or otherwise deteriorate. Embodiments of the invention are advantageous because they allow components to be configured for transmitting data indicative of a component's condition during operation of combustion turbine 10. Blades 18, 19, vanes 22, 23, and coatings 26, for example, may be configured for transmitting component specific data that may be directly monitored to determine the respective condition of each component during operation and to develop predictive maintenance schedules.

FIG. 1 also illustrates a schematic of an exemplary monitoring and control system 30 that may be used in accordance with various aspects of the present invention. System 30 may include an antenna 32, a receiver 33, a processor or CPU 34, a database 36 and a display 38. Processor 34, database 36 and display 38 may be conventional components and antenna 32 and receiver 33 may have performance specifications that are a function of various embodiments of the invention. For example, antenna 32 and receiver 33 may be selected for receiving wireless telemetry data transmitted from a plurality of transmitters deployed in various locations throughout combustion turbine 10 as more fully described below.

Embodiments of the present invention allow for a plurality of sensors to be embedded within the respective coatings of a plurality of components within combustion turbine 10. Alternate embodiments allow for the sensors to be surface mounted or deposited onto components, especially those contained in areas where components do not require a barrier coating such as the compressor. Exemplary embodiments of sensors may be used to provide data to system 30 with respect to physical characteristics of a component and/or properties of a component's coating as well as other component or coating specific information.

For example, exemplary sensors may be used to detect wear between two components, measure heat flux across a component's coating, detect spallation of a coating, measure strain across an area of a component or determine crack formation within a component or coating. Those skilled in the art will recognize other properties and/or characteristics of a component or component coating that may be measured and/or detected in accordance with aspects of the invention.

It will be appreciated that aspects of the invention allow for various sensor configurations to be embedded within a barrier coating such as a barrier coating 26 of blades 18 or vanes 22 of turbine 16. U.S. Patent Nos. 6,838,157; 7,270,890; 7,368,827; and, 7,618,712, which are specifically incorporated herein by reference, describe various embodiments of methods for instrumenting gas turbine components, such as blades 18, 19 and vanes 22, 23 that may be utilized for depositing sensors in accordance with aspects of the present invention. These patents disclose various methods of forming trenches in a barrier coating, forming a sensor in the coating and depositing a backfill material in the trench over the coating. Embodiments of those methods and components may be used to form smart components as disclosed herein.

U.S. Patent No. 6,576,861, which is specifically incorporated herein by reference, discloses a method and apparatus that may be used to deposit embodiments of sensors and sensor connectors with transmitters in accordance with aspects of the present invention. In this respect, methods and apparatuses disclosed therein may be used for the patterning of fine sensor and/or connector features of between about 100 microns and 500 microns without the need of using masks. Multilayer electrical circuits and sensors may be formed by depositing features using conductive materials, resistive materials, dielectric materials, insulating materials and other application specific materials. It will be appreciated that other methods may be used to deposit multilayer electrical circuits and sensors in accordance with aspects of the invention. For example, thermal spraying, vapor deposition, laser sintering and curing deposits of material sprayed at lower temperatures may be used as well as other suitable techniques recognized by those skilled in the art.

Embodiments of the invention allow for a plurality of sensors 50 to be deployed in numerous places within combustion turbine 10 for monitoring component-specific or coating-specific conditions as well as collecting other data with respect to the operation or performance of combustion turbine 10. For example, FIG. 1 illustrates that one or more sensors 50 may be embedded within respective barrier coatings 26 of one or more blades 18 of turbine 16. It will be appreciated that sensors 50 may be embedded within barrier coatings of other components with turbine 16 for which component-specific and/or coating-specific data is to be acquired.

The sensors 50 may be incorporated in wireless telemetry systems as that disclosed in U.S. Publication No. 2009/0121896 and U.S. Application No. 13/015,765, which are incorporated herein by reference. Such telemetry systems utilize power induction systems, such as resonant energy transfer systems or induction coil systems and incorporate transceivers for the wireless transmission electronic data. The transceivers are provided in electrical communication with sensors 50 for the transmission of electronic data signals that may be indicative of an operating condition of a component.

With respect to embodiments of the present invention, the above-described sensors and wireless telemetry systems are provided for communication with the control system 30, including the antenna 32 and receiver 33 for receiving electronic data signals indicative of one or more operating conditions associated with components such as blades 18, 19 and vanes 22, 23 and/or the coatings on such components of the turbine engine 10. The database 36 may include historical data relative to past operating conditions of the engine 10 and the components of the engine. For example, such historical data may include the different loads under which the turbine engine 10 has been operating and the amount of time the turbine engine 10 has been operating under each such loads and the inlet and exhaust turbine temperatures and pressures over time, the number of cycles that the engine has operated in and the rate of each such cycle. This historical data relative to the engine 10 and its components may also include data relative to certain ambient parameters that can affect the condition of the engine 10, the components and the occurrence of failure modes. For example, turbine engines that are used in power generation plants are located at various geographic locations. Accordingly, data relative to ambient temperature, humidity and air pressure may be provided. As explained in more detail, this historical data relative to operating conditions of the engine and the component are input into algorithms to determine a remaining useful life of multiple components of the engine to more efficiently and accurately determine maintenance schedules for the engine 10.

In addition, the database 36 may include historical data relative operating conditions of the components over the duration of the operating period or periods of the turbine engine 10. Such conditions may include data relative to conditions associated with the thermal barrier coating such as temperature of the component and fluid (air, exhaust, steam, etc.) pressure across the component. Other conditions may relate to a component substrate such as vibration information (frequency and amplitude data for vibrational movement), distortion (bending/twisting) of the substrate. As explained in more detail below, these operating conditions are continuously monitored over time and are associated with identified failure modes in order to estimate a remaining useful life of certain components and the engine 10.

In addition to the above-described historical data relative to components, data relative to future planned operating parameters or condition of the engine may be provided, which may be stored in database 36 or any other available memory that is accessible by the processor 34. As indicated above relative to historical engine data, the future planned operation of the engine may refer to the different loads under which the engine 10, exhaust temperature and pressure and time of operating at such conditions. The processor or CPU 34 is programmed or configured to access 1) the historical data relative to the operating conditions of the engine; 2) the future planned operating conditions of the turbine engine; and, 3) the current operating conditions of the components as provided by the above-referenced sensor and telemetry systems, to determine a remaining useful life of one or more components of the engine 10 and the remaining useful life of the engine. Based on this determination, the processor 34 is able to render a decision when to shut the engine down for maintenance and/or service. In addition, the below-described predictive life curves may be incorporated into one or more life prediction algorithms to determine the remaining useful life of components and the engine 10.

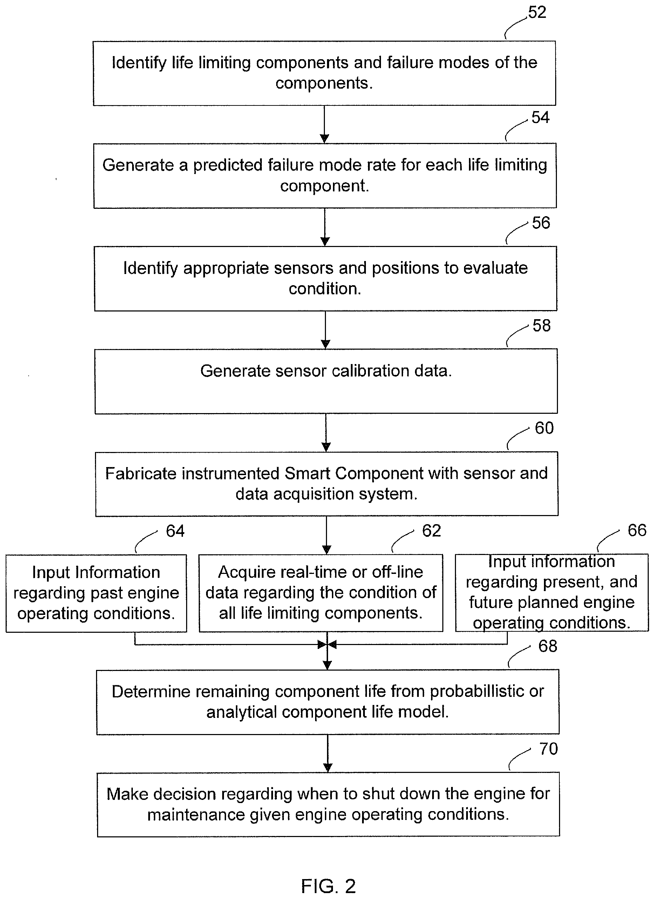

With respect to FIG. 2, a flow chart outlines steps for a condition based monitoring/maintenance system and method of predicting a remaining useful life in which the above-described sensors 50 and wireless telemetry systems are used to acquire current data relative to operating conditions of components such as blades 18, 19 and vanes 22, 23 of the turbine engine 10. In a first step 52 "life-limiting" components are identified, as well as the failure modes of such components, for purposes of monitoring the condition of the engine 10. Such components and failure modes may be identified by analyzing repair trends of the engine 10 and its components. This may be done by performing failure mode effects analysis or by analyzing repair records of turbine engines.

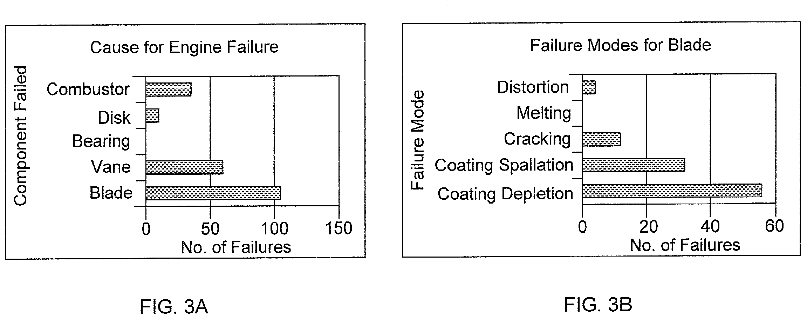

In reference to FIG. 3A, certain components of a turbine engine that are found to cause engine failures are identified. As shown, vanes and blades are identified, by way of example, as sources of the highest numbers of failures, as compared to a combustor, disks and bearings. In particular, in this example, blades were found to be the source of the highest number of failures. In addition, in FIG. 3B, the different failure modes of a blade have been identified including blade (or substrate) distortion, melting of a component substrate, cracking of the component, spallation of a thermal barrier coating (TBC) and depletion of the TBC by oxidation growth within the coating.

In an embodiment of the present invention, coatings such as a thermal barrier coating, which may or may not include a bond coat, applied to a substrate of the blades 18, 19 and vanes 22, 23 are monitored for purposes of determining a remaining useful life of a component. Such coatings may have different failure modes such as spallation and coating depletion, which may be the result of growth of oxidation in the coating. Thus, the above-described sensors 50 deposited in connection with a component are embedded within or on a coating for monitoring an operating condition associated with the component and coating. More specifically, a component operating condition that is monitored and associated with coating depletion and spallation is TBC temperature. Accordingly, heat flux sensors including thermocouples may be embedded in the TBC for monitoring temperature of a component. In addition, strain gauges may be affixed to a substrate to monitor conditions such as static and dynamic vibrational modes, which may be associated with spallation, cracking or distortion failure modes.

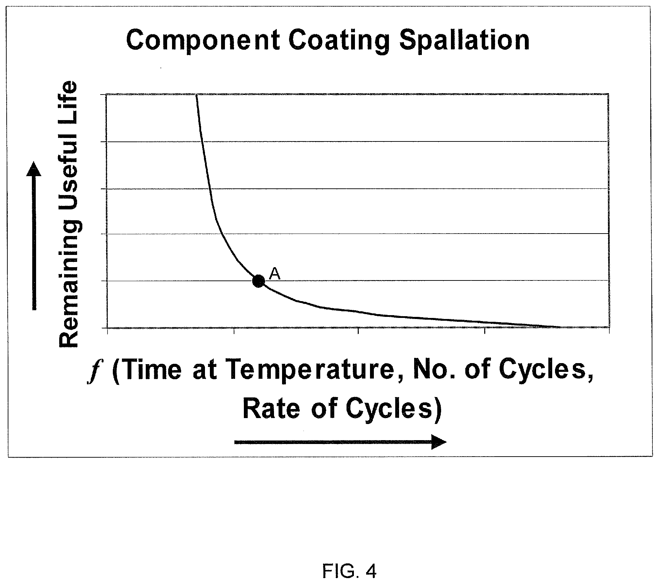

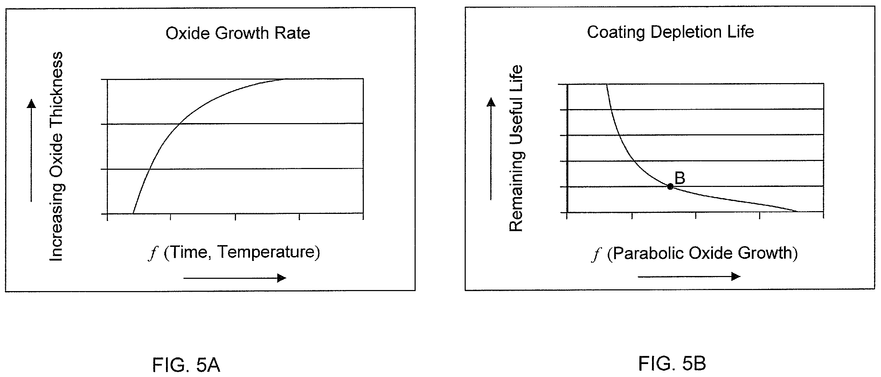

In a second step 54, a predicted "failure mode rate" is generated for each component and an associated failure mode identified in the first step 52. A failure mode rate or predicted failure mode rate may be defined as the estimated or predicted occurrence of a failure mode of a component as a function of one or more operating conditions of the component. Examples of predicted failure mode rates are represented in the curves shown in FIGS. 4, 5A and 5B. With respect to FIG. 4, the occurrence of a failure of a component due to spallation is represented at point A on the curve, which may represent a threshold remaining life of the component at which maintenance should occur before a catastrophic failure occurs due to spallation.

With respect to FIGS. 5A and 5B, the failure mode rate of the component due to coating depletion is plotted in two curves. In general, coating depletion of a thermal barrier is largely a function of the thickness of an oxide layer that grows within the TBC over time at extreme operating temperatures. Accordingly, with respect to FIG. 5A, the oxide growth rate is represented as a parabolic curve of an increasing oxide thickness as a function of time and temperature. This oxide thickness translates to coating depletion of the TBC which is an identified failure mode. The occurrence of a failure of a component due to coating depletion is represented at point B on the curve, which may represent a threshold remaining life of the component at which maintenance should occur before a catastrophic failure occurs due to coating depletion.

The occurrence of a failure mode, whether the failure mode occurs in the coating or substrate, is typically a function of time and temperature. That is, as the engine operates over time at extreme temperatures, as in a turbine engine, the component substrate or coating approaches one or more failure modes. Some turbine engines are operated as "baseload" engines wherein the engine 10 is operated for an extended period of time before being brought down for maintenance. For example, some such engines may be operated for as long as three years before the engines are shut down for maintenance or service. For such engines and the components, predicting a failure mode is dependent largely on time and temperature. However, other engine operating conditions besides time and temperature may affect failure modes. More specifically, other engines referred to as "peak" engines, are operated for much shorter time durations, for example, one or two days, which are also referred to as cycles. Therefore, over a predetermined time a turbine engine 10 may be operated a set number of cycles. In addition, the rate of the cycles is also an operating condition that may be considered.

The rate of a cycle is the amount of time required to bring an engine to operate at a predetermined output or the amount of time to shut down an engine up and cooling it to ambient temperature. The number of cycles and cycle rates places stress on the interface between the TBC and bonding coat and/or substrate, which stress may create cracking at the interface. This cracking then leads to spallation. Accordingly, the predicted remaining useful life of a component due to spallation is illustrated as a function of time, temperature, number of cycles and cycle rates.

In an embodiment, laboratory testing and/or mathematical modeling is performed considering the operating conditions of a component and engine that most influence the above-identified failure modes. In addition, historical data relative to the operating conditions of a turbine engine and its components may be used to develop these predicted failure modes. This may be obtained by mining data relative to turbine fleet information for turbines of similar design and performance. As described above these failure mode rates may be utilized to display trends in coating degradation in turbine engine components, or other failure modes such as cracking or distortion of the substrate of a component. Moreover, the curves provide data relative to an estimated rate at which a component approaches a failure mode or data relative to a time when the failure mode is predicted to occur.

While the above-described failure mode rates are represented in the form of predictive curves, data related to the predicted failure mode rates may be represented in other forms or formats. For example, the failure mode rate data may be simply presented in the form of providing one or more tables identifying a component (Row One Blade) and an estimated time (8,000 hours) at which a failure mode (spallation) will occur.

As provided in step 56, using the above-described failure mode data with respect to FIGS. 3A and 3B, or failure mode rate data with respect to FIGS. 4, 5A and 5B, one can then identify the appropriate sensors 50 that may be used in connection with components for monitoring operating conditions of the components, and the locations on the component where sensors 50 may be positioned. For example, if spallation and oxidation growth rate (coating depletion) are selected as failure modes to monitor, the temperature of a component or coating is monitored so a thermocouple may be selected as an appropriate sensor to detect heat flux across a barrier coating. In another example, if cracking is a failure mode of concern then a strain gauge may be selected, and can be arranged on the component or coating to detect the presence, depth, and orientation of cracks in a substrate or barrier coating. In addition, based on the repair data of similar components, one is able to identify the location on the component that may be most susceptible to a failure mode for positioning the sensor 50 on components.

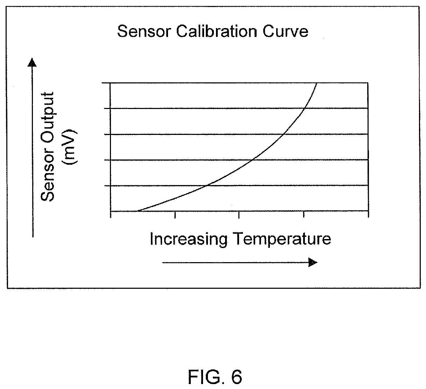

Once the appropriate sensors 50 and the locations of sensors 50 on the components are selected, the sensors 50 are calibrated as provided in step 58. In an embodiment, sensor calibration data as represented in the curve shown in FIG. 6 illustrates the sensor output when exposed to simulated turbine operating conditions. More specifically, FIG. 5 plots the output voltage of a thermocouple when exposed to different temperatures. This type of data may be plotted for the same type of sensor acquired from different vendors. Thus, the sensors 50 of an instrumented component are calibrated with like sensors. In this manner, data relating to operating conditions associated with a failure mode may be adjusted accordingly to provide more accurate data for life prediction capabilities.

Fabrication of sensors and wireless telemetry system (data acquisition system) is then performed at step 60. As indicated above, the sensors 50 and wireless telemetry components are fabricated in accordance with the methods and materials disclosed in U.S. Patent Nos.

6,838,157; 7,270,890; 7,368,827; and 7,618,712; and U.S. Publication No. 2009/012189; all of which have been specifically incorporated herein by reference.

With the engine 10 prepared for operation, including having the sensors 50 linked with the wireless telemetry system and control system 30, a planned operation of the engine is input into the control system 30. This planned operation includes data relative to a desired power output (i.e., load) for the turbine engine 10 and the amount of time over which the turbine engine 10 will operate at the load. This data may also include an estimated operating temperature of the engine including one or more estimated operating temperature for different stages of the turbine engine 10. In addition, ambient conditions such as ambient temperature and air pressure, which may vary according to geographic location of the engine 10, may be considered in developing a planned operation. For example, the desired power output for engines, such as the above-referenced "baseload" engines that operate in a power plant environment over extended periods of time, may vary over the course of a year. During certain times of the year the power output demand may be greater than other times of the year.

Again in reference to FIG. 2, an embodiment of the invention comprises the step 62 of acquiring data relative to one or more operating conditions of the components identified as potentially limiting the operating life of the engine 10. Using the sensors 50 and above-referenced wireless telemetry system, the condition based monitoring system is able to generate real-time data relative to operating conditions of the life-limiting components. As described above, such component operating conditions may be temperature, pressure, vibrational mode data, operating time, number of cycles and cycle rates or any other operating conditions that affect the occurrence of the identified failure modes. This current operating condition data may be used in conjunction with historical data relative to the same current operating conditions to determine a remaining useful life of one or more of the life-limiting components at a current time interval. The historical data includes data representing current operating conditions of a component that has been acquired and stored in the database 36 over the operating life of the engine 10.

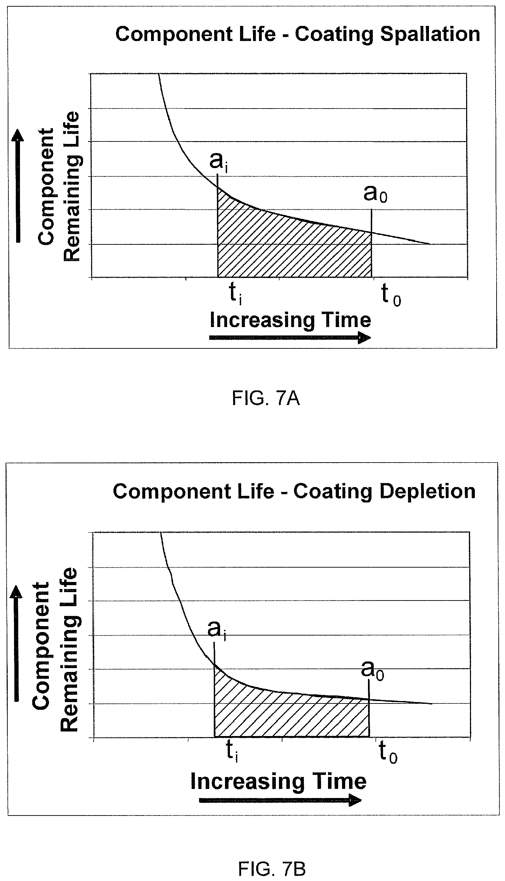

Accordingly, at step 64 information (historical data) regarding past engine operating conditions is input into life prediction algorithms and the above-described life predictive models (FIGS. 4, 5A and 5B) along with data relative to the current operating conditions (acquired in step 62) associated with the identified failure modes, and the processor 34 is configured to determine a remaining useful life at a current time interval. This remaining useful life value is represented in the curves illustrated in FIGS. 7A and 7B. With respect to FIG. 7A and 7B, a remaining life, $a_i$, of a component due to spallation (FIG. 7A) and coating depletion (FIG. 7B) is shown at a current time interval, $t_i$, which is generally the time at which the current operating conditions are acquired. The remaining useful life may be determined for each of the life-limiting components and, for each component, a remaining useful life may be determined relative to each identified failure mode. In practice the display 38 may show all the identified failure modes for a given component and the associated number of hours representing a remaining useful life due to the corresponding failure mode. Alternatively, the display 38 may only show the shortest remaining life value associated with a failure mode for each component.

The database 36 may also include data relative to a threshold value of a remaining useful life associated with each failure mode for each identified life-limiting component. The processor 34 may be configured such that when the determined or calculated remaining useful life falls below this threshold value, or is within a predetermined range above the threshold value, to transmit an audible and/or visual notification of service or maintenance for the component and engine. This threshold value of the remaining useful life may be taken from the predicted trend of a failure mode as shown in FIGS. 4, 5A and 5B.

However, as this threshold value may be predictive in nature and not based on actual operating conditions of the engine, because it is based on models developed using data such as turbine engine fleet data, other steps may be taken to provide a more accurate remaining useful life. Accordingly, in step 66 data relative to presently planned and future planned operating conditions is input or provided. That is, the above-mentioned planned operation developed for the engine 10 at any time during the operation of the engine includes the present operating conditions of the engine including power output and temperature and the operating conditions of engine that are programmed for the future. In an embodiment of the invention, the processor 34 is programmed to input the data relating to the present and future planned engine operating conditions into life prediction algorithms to calculate a remaining useful life, as set forth in steps 66 and 68.

With respect to FIGS. 7A and 7B, a remaining useful life of a component is displayed in the form of a curve due to spallation (FIG. 7A) and coating depletion (FIG. 7B) factoring in present and future engine operating conditions. As described above, $a_i$ represents a calculated remaining life of a component associated with a specified failure mode (spallation and coating depletion) at a specified time interval. In addition, $a_o$ represents the specified failure mode (degree of spallation or amount of coating depletion due to oxide growth) that is reached at a life-limit time $t_o$ relative to a start time of the turbine engine. Thus, the remaining useful life at the specified failure mode $a_o$ may be estimated as:

$$\Delta t = \frac{a_i - a_o}{v}$$

where v is the velocity at which the critical operating conditions responsible for the specified failure mode such as spallation and coating depletion.

In an embodiment of the invention, the processor 34 is configured to determine the remaining useful life for each identified failure mode for each identified life-limiting component. This information may be displayed in any available format. For example, the display 38 may list all life-limiting components and the remaining useful life associated with each failure mode. Alternatively, the display 38 may show only a single number (hours) representative of the remaining useful life of a single component. This number would represent the shortest remaining useful life calculated for a failure mode.

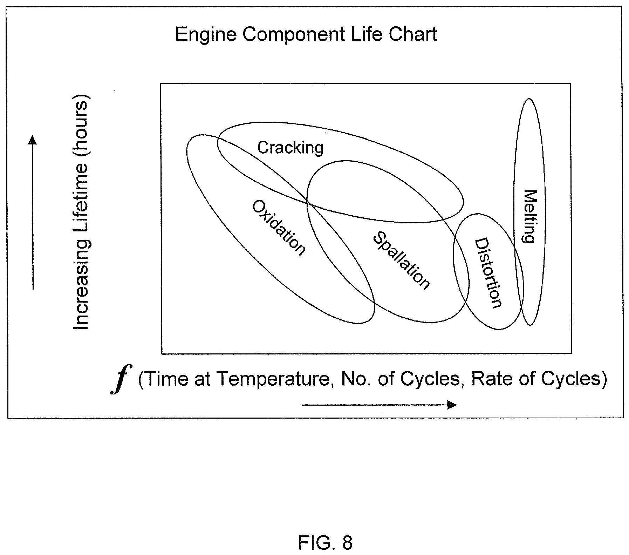

The graph shown in FIG. 8 represents an engine component life chart that may be used at any point in time of the operation of the engine 10 to display areas within which a failure mode will occur. As shown, each of the bubbles A, B, C, D and E represents an area of expected occurrence of a failure mode as a function of operating conditions such as time, temperature, number of cycles and rate of cycles. This graphic may be altered by changing future planned operations, for example, by adjusting the operating temperature or power output, or by adjusting the number of cycles. In this manner, the remaining useful life of a component can be increased if necessary.

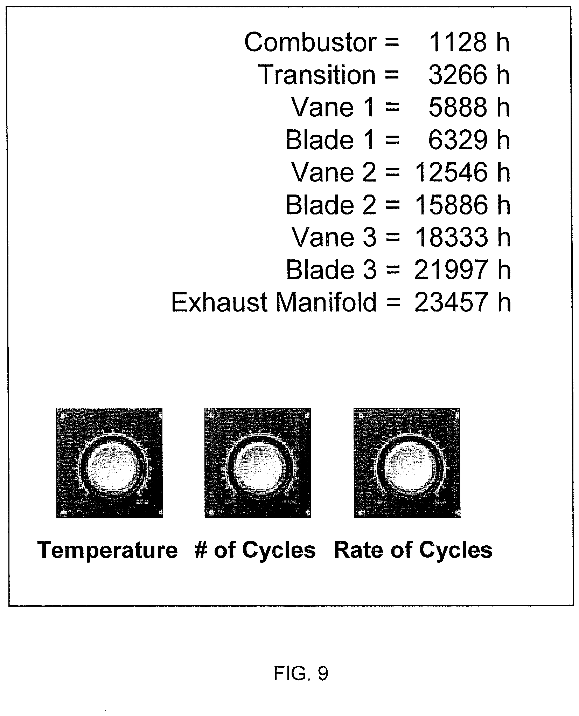

An alternative display is shown in FIG. 9, which identifies various life-limiting components and provides input mechanisms 72, 74 and 76. As shown, for each component a remaining useful life in hours is displayed and represents the shortest remaining useful life associated with a failure mode. The input mechanisms 72, 74 and 76 allow a user to adjust the operating conditions of a future planned operation and the processor 34 is configured to adjust the calculated remaining useful life for each component and each failure mode for each components. This may be done in order to extend the life of components and the engine 10. In either embodiment, as provided in step 70 of FIG. 2, one is able to render more informed decisions on when to shut the engine 10 down for maintenance given the calculated remaining useful life based on past component operating conditions, current operation conditions and the future planned operations

While various embodiments of the present invention have been shown and described herein, it will be obvious that such embodiments are provided by way of example only. Numerous variations, changes and substitutions may be made without departing from the invention herein. Accordingly, it is intended that the invention be limited only by the scope of the appended claims.

## Claims

1. A method for predicting the remaining useful life of an engine (10) having components (18, 19, 22, 23) that are instrumented including one or more sensors (50) mounted on the components that generate electronic data signals indicative of an operating condition of the component for use in a conditioned base monitoring system (30), the method comprising:
identifying (52) one or more components and at least one failure mode for each component that limit an operating life of the components and engine;
generating (54) a predicted failure mode rate for each identified component and relative to one or more operating conditions of the component, wherein a predicted failure mode rate comprises the predicted occurrence of a failure mode of a component as a function of one or more operating conditions of the component;
providing (60) one or more of the components with a sensor affixed to a substrate of the component that detects a current operating condition of the component that is associated with a failure mode of the component and the predicted failure mode rate;
acquiring (62), via the sensors, and storing data relative to the current operating condition of the components during operation of the engine and the current operating condition is associated with an identified failure mode;
providing (64) historical data relative to the current operating condition of component that is associated with the failure mode of the component; and,
determining (68) a remaining useful life of the component based on the data relative to current operating condition of the components, the data relative to historical data of the operating condition associated with the failure mode and the predicted failure mode rate, **characterized in that**, the method further comprises providing (66) data relative to future planned operating conditions of the engine, the future planned operating conditions of the engine comprising a desired power output of the engine and an amount of time over which the engine will operate at the desired power output,
wherein the step of determining (68) also includes determining the remaining useful life of the components based on the data relative to the future planned operating conditions of the engine.

2. The method of claim 1, further comprising modifying the future planned operating conditions of the engine (10) based on the determined remaining useful life of the components (18, 19, 22, 23).

3. The method of claim 1, further comprising providing a wireless telemetry device in electrical communication with the sensor (50) that transmits electronic data signals that are indicative of the operating condition and received from the sensor.

4. The method of claim 1, wherein the step (60) of providing the sensor (50) comprises positioning the sensor on or within a protective coating formed on the substrate of the one or more life-limiting components (18, 19, 22, 23), and the sensor detects an operation condition of the coating.

5. The method of claim 1, wherein generating (54) the one or more failure mode rates includes generating the failure mode rates as a function of time of operation at one or more temperatures.

6. The method of claim 1, further comprising generating (58) sensor calibration data for the sensor (50) that detects the operating condition associated with the failure mode and calibrating an output of the sensor.

7. The method of claim 1, wherein the engine is a turbine engine (10) including a compressor section (12) and a turbine section (16) and the component is a blade (18) mounted for rotation about a longitudinal axis of the turbine engine.

**Patentansprüche**

1. Verfahren zum Prognostizieren der verbleibenden Nutzlebensdauer einer Kraftmaschine (10) mit Komponenten (18, 19, 22, 23), die unter anderem mit einem oder mehreren Sensoren (50) ausgestattet sind, welche an den Komponenten angebracht sind und elektronische Datensignale zur Verwendung in einem zustandsorientierten Überwachungssystem (30) erzeugen, die einen Betriebszustand der Komponente anzeigen, wobei das Verfahren Folgendes umfasst:

Identifizieren (52) einer oder mehrerer Komponenten und mindestens einer Fehlerart für jede Komponente, die eine Betriebslebensdauer der Komponenten und der Kraftmaschine begrenzen,
Erzeugen (54) einer prognostizierten Fehlerarthäufigkeit für jede identifizierte Komponente und in Bezug auf einen oder mehrere Betriebszustände der Komponente, wobei eine prognostizierte Fehlerarthäufigkeit das prognostizierte Auftreten einer Fehlerart einer Komponente in Abhängigkeit von einem oder mehreren Betriebszuständen der Komponente umfasst,
Bereitstellen (60) eines Sensors für eine oder mehrere der Komponenten, der an einem Substrat der Komponente fixiert ist und einen aktuellen Betriebszustand der Komponente erkennt, welcher mit einer Fehlerart der Komponente und der prognostizierten Fehlerarthäufigkeit verknüpft ist,
Gewinnen (62) von Daten mittels der Sensoren und Speichern der Daten in Bezug auf den aktuellen Betriebszustand der Komponenten bei Betrieb der Kraftmaschine, wobei der aktuelle Betriebszustand mit einer identifizierten Fehlerart verknüpft ist,

Bereitstellen (64) von Verlaufsdaten in Bezug auf den aktuellen Betriebszustand einer Komponente, der mit der Fehlerart der Komponente verknüpft ist, und

Ermitteln (68) einer verbleibenden Nutzlebensdauer der Komponente auf der Grundlage der Daten in Bezug auf den aktuellen Betriebszustand der Komponenten, der Daten in Bezug auf Verlaufsdaten zu dem mit der Fehlerart verknüpften Betriebszustand und der prognostizierten Fehlerarthäufigkeit,

**dadurch gekennzeichnet, dass**

das Verfahren ferner das Bereitstellen (66) von Daten in Bezug auf in Zukunft geplante Betriebszustände der Kraftmaschine umfasst, wobei die in Zukunft geplanten Betriebszustände der Kraftmaschine eine Soll-Ausgangsleistung der Kraftmaschine und einen Zeitraum umfassen, in dem die Kraftmaschine mit der Soll-Ausgangsleistung arbeiten wird,

wobei das Ermitteln (68) auch das Ermitteln der verbleibenden Nutzlebensdauer der Komponenten auf der Grundlage der Daten in Bezug auf die in Zukunft geplanten Betriebszustände der Kraftmaschine umfasst.

2. Verfahren nach Anspruch 1, das ferner das Modifizieren der in Zukunft geplanten Betriebszustände der Kraftmaschine (10) auf der Grundlage der ermittelten verbleibenden Nutzlebensdauer der Komponenten (18, 19, 22, 23) umfasst.

3. Verfahren nach Anspruch 1, das ferner das Bereitstellen einer drahtlosen Telemetrievorrichtung umfasst, die elektrisch mit dem Sensor (50) verbunden ist, der elektronische Datensignale überträgt, die den Betriebszustand anzeigen und aus dem Sensor empfangen werden.

4. Verfahren nach Anspruch 1, wobei das Bereitstellen (60) des Sensors (50) das Positionieren des Sensors an oder in einer Schutzschicht umfasst, die an dem Substrat der einen oder der mehreren lebensdauerbegrenzenden Komponenten (18, 19, 22, 23) ausgebildet ist, und der Sensor einen Betriebszustand der Beschichtung erkennt.

5. Verfahren nach Anspruch 1, wobei das Erzeugen (54) der einen oder der mehreren Fehlerarthäufigkeiten das Erzeugen der Fehlerarthäufigkeiten in Abhängigkeit von der Betriebsdauer bei einer oder mehreren Temperaturen umfasst.

6. Verfahren nach Anspruch 1, das ferner das Erzeugen (58) von Sensorkalibrierungsdaten für den Sensor (50), der den Betriebszustand erkennt, welcher mit der Fehlerart verknüpft ist, und das Kalibrieren eines Ausgangs des Sensors umfasst.

7. Verfahren nach Anspruch 1, wobei es sich bei der Kraftmaschine um eine Turbine (10) mit einem Verdichterabschnitt (12) und einem Turbinenabschnitt (16) und bei der Komponente um eine Schaufel (18) handelt, die so montiert ist, dass sie um eine Längsachse der Turbine rotiert.

**Revendications**

1. Procédé de prédiction de la durée de vie utile résiduelle d'un moteur (10) comportant des composants (18, 19, 22, 23) qui sont dotés d'instruments, dont un ou plusieurs capteurs (50) montés sur les composants, qui produisent des signaux de données électroniques indicatifs d'un état de fonctionnement du composant en vue de leur utilisation dans un système (30) de surveillance basée sur les états, le procédé consistant :

à identifier (52) un ou plusieurs composants et au moins un mode de défaillance pour chaque composant qui limitent une durée de vie en service des composants et du moteur ;

à produire (54) un taux prédit de mode de défaillance pour chaque composant identifié et relatif à un ou plusieurs états de fonctionnement du composant, étant entendu qu'un taux prédit de mode de défaillance consiste en la survenue prédite d'un mode de défaillance d'un composant en fonction d'un ou de plusieurs états de fonctionnement du composant ;

à doter (60) un ou plusieurs des composants d'un capteur fixé à un substrat du composant qui détecte un état de fonctionnement courant du composant qui est associé à un mode de défaillance du composant et au taux prédit de mode de défaillance ;

à acquérir (62), au moyen des capteurs, et à enregistrer des données relatives à l'état de fonctionnement courant des composants pendant le fonctionnement du moteur, l'état de fonctionnement courant étant associé à un mode de défaillance identifié ;

à fournir (64) des données historiques relatives à l'état de fonctionnement courant du composant qui est associé au mode de défaillance du composant, et

à déterminer (68) une durée de vie utile résiduelle du composant sur la base des données relatives à l'état de fonctionnement courant des composants, des données relatives aux données historiques de l'état de fonctionnement associé au mode de défaillance et du taux prédit de mode de défaillance,

**caractérisé en ce que** le procédé consiste par ailleurs à fournir (66) des données relatives à de futurs états de fonctionnement planifiés du moteur, les futurs états de fonctionnement planifiés du moteur comprenant une puissance de sortie voulue du moteur et une quantité de temps pendant laquelle le moteur fonctionnera à la puissance de sortie voulue,

étant entendu que l'étape de détermination (68) consiste aussi à déterminer la durée de vie utile résiduelle des composants sur la base des données relatives aux futurs états de fonctionnement planifiés du moteur.

2. Procédé selon la revendication 1, consistant par ailleurs à modifier les futurs états de fonctionnement planifiés du moteur (10) sur la base de la durée de vie utile résiduelle déterminée des composants (18, 19, 22, 23).

3. Procédé selon la revendication 1, consistant par ailleurs à mettre à disposition un dispositif télémétrique sans fil communiquant électriquement avec le capteur (50) qui transmet des signaux de données électroniques qui sont indicatifs de l'état de fonctionnement et reçus du capteur.

4. Procédé selon la revendication 1, dans lequel l'étape (60) de mise à disposition du capteur (50) consiste à positionner le capteur sur ou dans un revêtement protecteur réalisé sur le substrat du ou des plusieurs composants (18, 19, 22, 23) limitant la durée de vie, le capteur détectant un état de fonctionnement du revêtement.

5. Procédé selon la revendication 1, dans lequel la production (54) du ou des plusieurs taux de mode de défaillance consiste à produire les taux de mode de défaillance en fonction du temps de fonctionnement à une ou plusieurs températures.

6. Procédé selon la revendication 1, consistant par ailleurs à produire (58) des données d'étalonnage de capteur pour le capteur (50) qui détecte l'état de fonctionnement associé au mode de défaillance, et à étalonner une sortie du capteur.

7. Procédé selon la revendication 1, étant entendu que le moteur est un moteur (10) à turbine comprenant une section formant compresseur (12) et une section formant turbine (16), et que le composant est une aube mobile (18) montée à rotation autour d'un axe longitudinal du moteur à turbine.

FIG. 1

FIG. 2

FIG. 3B

FIG. 3A

**Component Coating Spallation**

Remaining Useful Life

*f* (Time at Temperature, No. of Cycles, Rate of Cycles)

FIG. 4

FIG. 5B

FIG. 5A

FIG. 6

FIG. 7A

FIG. 7B

Engine Component Life Chart

Increasing Lifetime (hours)

Cracking

Oxidation

Spallation

Distortion

Melting

$f$ (Time at Temperature, No. of Cycles, Rate of Cycles)

FIG. 8

Combustor =   1128 h
Transition =   3266 h
Vane 1 =   5888 h
Blade 1 =   6329 h
Vane 2 = 12546 h
Blade 2 = 15886 h
Vane 3 = 18333 h
Blade 3 = 21997 h
Exhaust Manifold = 23457 h

**Temperature   # of Cycles   Rate of Cycles**

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030120402 A1
- US 6838157 B
- US 7270890 B
- US 7368827 B
- US 7618712 B
- US 6576861 B
- US 20090121896 A
- US 015765 A
- US 2009012189 A